# EUROPEAN PATENT APPLICATION

(11) **EP 1 146 582 A1**
(43) Date of publication of application: **17.10.2001**
(21) Application number: 01109075.0
(22) Date of filing: 11.04.2001
(51) Int. Cl.: H01M 4/52

(54) **Active material for positive electrode of alkaline storage battery and method for producing the same, and alkaline storage battery using the same**

(30) Priority: 12.04.2000 JP 2000110691
(71) Applicant: MATSUSHITA ELECTRIC INDUSTRIAL CO., LTD., Kadoma-shi, Osaka 571-8501 (JP); TOYOTA JIDOSHA KABUSHIKI KAISHA, Aichi-ken 471-8571 (JP)
(72) Inventor: Hayashi, Kiyoshi, Nishitakashi-cho, Toyohashi-shi, Aichi (JP); Ikoma, Munehisa, Toyohashi-shi, Aichi 440-0814 (JP)
(74) Representative: Leson, Thomas Johannes Alois, Dipl.-Ing.

(57) **Abstract**

An active material for a positive electrode of an alkaline storage battery comprising particles containing nickel hydroxide and provided with pores, and a conductive material filled in the pores. The conductive material includes a cobalt compound and at least one element selected from the group consisting of rare earth elements and zinc.

## Description

The present invention relates to active materials for positive electrodes of alkaline storage batteries and methods for producing the same, and alkaline storage batteries using the same.

In recent years, as portable information terminal equipment such as cellular phones and notebook-sized personal computers has become widespread, there has been a great demand for secondary batteries having a small size, a small weight and a high energy density. Furthermore, there also has been a demand for secondary batteries that can have excellent characteristics even in a high temperature environment created by heat generation of the equipment. In addition, for use as power sources for electric cars or hybrid vehicles, secondary batteries that have a high energy density and can be used in a wide range of temperatures are under development.

Conventionally, nickel paste positive electrodes have been used in alkaline secondary batteries. However, the energy densities thereof are high in the vicinity of room temperature, but become low in a high temperature atmosphere. This problem is caused by the fact that charging in high temperature atmospheres is likely to cause an oxygen evolution reaction (competitive reaction) in the positive electrode, in addition to a regular reaction in which nickel hydroxide is oxidized to nickel oxyhydroxide. When an oxygen evolution reaction is caused in the positive electrode, the reaction in which nickel hydroxide is converted to nickel oxyhydroxide by charging does not occur sufficiently, so that the utilization factor of nickel hydroxide is reduced. On the other hand, in order to collect a large amount of current for a short time, a dense conductive network as formed in a sintered positive electrode including a substrate having the ability to collect current is required.

In order to solve these problems, the following methods have been reported: a method (1) of incorporating a compound comprising yttrium, indium, antimony, barium, and beryllium to the positive electrode (see JP 4-248973 A), and a method (2) of embedding cobalt oxyhydroxide or cobalt oxide in the pores of nickel hydroxide (see JP 7-114920). The method (1) is directed to providing a battery having a high utilization factor of the positive electrode in a high temperature atmosphere in the following manner. The compound containing yttrium, etc. is adsorbed onto a surface of nickel oxide, which is an active material, to increase overvoltage of oxygen evolution so as to suppress a competitive reaction (oxygen evolution reaction) in charging in a high temperature atmosphere. The method (2) is directed to providing a battery having a high utilization factor of the positive electrode by coating surfaces of particles of nickel hydroxide powder and the inside of the pores thereof with β cobalt oxyhydroxide to increase the conductivity between the active material for the positive electrode and the collector.

However, the method (1) has the following problems. An additive tends to be dispersed only non-uniformly or dissolved insufficiently in the positive paste, so that satisfactory effects cannot be obtained, and therefore a large amount of an additive is required to provide a distinct advantage. Thus, the method (1) failed to achieve batteries with a high capacity.

In the method (2), for oxidation of cobalt hydroxide to cobalt oxyhydroxide, cobalt hydroxide is treated with an acidic aqueous solution containing potassium peroxodisulfate, and therefore, although the cobalt hydroxide is converted to β cobalt oxyhydroxide, the reaction stops in this level. Thus, the conductivity of the positive electrode is not sufficient.

Therefore, with the foregoing in mind, it is an object of the present invention to provide an active material for a positive electrode that can provide an alkaline storage battery having excellent high temperature charging characteristics and a high capacity and a method for producing the same, and an alkaline storage battery using the same.

An active material for a positive electrode of an alkaline storage battery of the present invention includes particles comprising nickel hydroxide and provided with pores, and a conductive material filled in the pores. The conductive material comprises a cobalt compound and at least one element selected from the group consisting of rare earth elements and zinc. In the above active material for a positive electrode, at least one element selected from the group consisting of rare earth elements and zinc filled in the pores increases oxygen overvoltage, so that an oxygen evolution reaction can be suppressed during charging in a high temperature atmosphere. Therefore, the active material for a positive electrode can provide an alkaline storage battery having excellent high temperature charging characteristics. Furthermore, the active material for a positive electrode can form a favorable conductive network, so that an alkaline storage battery can be obtained with a high utilization factor of the positive electrode and a high capacity.

In the above active material for a positive electrode, it is preferable that the average radius of the pore is in the range of 1nm to 8nm. According to this embodiment, cobalt, zinc, yttrium or the like can be filled deep inside the pores, and the density of the active material can be kept high.

In the above active material for a positive electrode, it is preferable that the cobalt compound comprises γ cobalt oxyhydroxide. Since γ cobalt oxyhydroxide has a high conductivity, this embodiment makes it possible to produce an alkaline storage battery having a particularly high utilization factor of the positive electrode and particularly high output characteristics.

In the above active material for a positive electrode, it is preferable that the rare earth element is at least one selected from the group consisting of yttrium, erbium, and ytterbium. This embodiment enhances the function of increasing oxygen overvoltage, so that the charging efficiency at high temperatures is improved.

It is preferable that the above active material for a positive electrode comprises the nickel hydroxide and the cobalt compound in a weight ratio of 100: A, where 2 ≤ A ≤ 20. When the ratio is 2 ≤ A, the network can be formed sufficiently deep into the pores, and CoOOH having a high conductivity can be formed by discharging and charging. A ratio of A ≤ 20 can prevent unreacted Co(OH)₂ from remaining and deteriorating the conductivity.

A method for producing an active material for a positive electrode of an alkaline storage battery of the present invention includes a first process of: adding particles comprising nickel hydroxide and provided with pores to an aqueous solution comprising cobalt and at least one element selected from the group consisting of rare earth elements and zinc; and stirring the aqueous solution under a reduced pressure, thereby filling a conductive material comprising the at least one element and the cobalt in the pores. According to this method, the active material for a positive electrode of the present invention can be produced easily.

It is preferable that the above method further includes a second process of adding an alkaline solution to the particles that have been subjected to the first process to form a mixture of the alkaline solution and the particles, and stirring the mixture in an oxygen atmosphere. This embodiment can convert Co(OH)₂ to CoOOH.

In the above method, it is preferable that the stirring is performed while heating in the second process. This embodiment facilitates production of γ-CoOOH more than β-CoOOH.

In the above method, it is preferable that the alkaline solution is a sodium hydroxide solution. This embodiment particularly facilitates production of γ-CoOOH.

In the above method, it is preferable that the average radius of the pore is in the range of 1nm to 8nm. According to this embodiment, cobalt, zinc yttrium or the like can be filled deep inside the pores, and the density of the active material can be kept high.

In the above method, it is preferable that the rare earth element is at least one selected from the group consisting of yttrium, erbium, and ytterbium. This embodiment enhances the function of increasing oxygen overvoltage, so that the charging efficiency at high temperatures is improved.

An alkaline storage battery of the present invention includes a positive electrode, a negative electrode, and an electrolyte, wherein the positive electrode comprises the active material of the present invention. Since the alkaline storage battery comprises the active material of the present invention, the alkaline storage battery of the present invention has excellent high temperature charging characteristics and output characteristics, and a high capacity.

Thus, the active material of the present invention can provide an alkaline storage battery having excellent high temperature charging characteristics and output characteristics, a high utilization factor of the positive electrode and a high capacity.

Furthermore, according to the method of the present invention for producing an active material for a positive electrode, the active material for a positive electrode of the present invention can be produced easily.

Furthermore, the alkaline storage battery of the present invention can have excellent high temperature charging characteristics and output characteristics, a high utilization factor of the positive electrode and a high capacity.

These and other advantages of the present invention will become apparent to those skilled in the art upon reading and understanding the following detailed description with reference to the accompanying figures.

### BRIEF DESCRIPTION OF THE DRAWINGS

Figs. 1A and 1B are views showing a process sequence of an example of a method for producing an active material for a positive electrode of the present invention.

Fig. 2 is a partially exploded perspective view showing an example of an alkaline storage battery of the present invention.

Fig. 3 is a diagram showing a reaction of cobalt oxide with regard to an alkaline storage battery of the present invention.

Hereinafter, examples of embodiments of the present invention will be described with reference to the accompanying drawings.

### Embodiment 1

In Embodiment 1, an example of an active material for a positive electrode of the present invention will be described. The active material for a positive electrode of the present invention can be used for alkaline storage batteries.

The active material for a positive electrode of Embodiment 1 comprises particles containing nickel hydroxide as the main component and provided with pores (which may be referred to as nickel hydroxide particles in the following), and a conductive material filled in the pores. The conductive material comprises a cobalt compound and at least one element selected from rare earth elements and zinc.

It is preferable that the average radius of a pore of the nickel hydroxide particle is in the range from 1nm to 8nm. The nickel hydroxide particles may contain a solid solution of nickel hydroxide and (an)other element(s). More specifically, for example, nickel hydroxide may form a solid solution with at least one element selected from cobalt and zinc.

It is preferable that the cobalt compound contained in the conductive material comprises γ cobalt oxyhydroxide (γ-CoOOH), and more preferably the cobalt compound comprises γ cobalt oxyhydroxide as the main component. Herein, γ cobalt oxyhydroxide belongs substantially to a quasi-hexagonal system (or geometrically belongs substantially to a hexagonal system). More specifically, γ cobalt oxyhydroxide belongs to either one of crystal systems of hexagonal, orthorhombic, and monoclinic systems. Furthermore, γ cobalt oxyhydroxide is a cobalt oxide having a layered structure. In γ cobalt oxyhydroxide, the crystal lattice extends in the *c* - axis direction to a larger extent (to be specific, 0.55nm to 0.70nm) than at least that of β-Co(OH)₂, and the valence of cobalt is larger than 3.0. In addition, γ cobalt oxyhydroxide has a higher conductivity than that of β cobalt oxyhydroxide. While not wishing to be bound by any particular theory, γ cobalt oxyhydroxide seems to have a higher conductivity than that of β cobalt oxyhydroxide for the following reason. The cobalt layer in crystallites of the γ cobalt oxyhydroxide exhibits an electronic conductivity mainly because the valence of the cobalt is larger than 3.0. Therefore, the positive electrode comprising γ cobalt oxyhydroxide as a conductant agent has a higher conductivity. The conductive material may contain a cobalt compound other than γ cobalt oxyhydroxide, such as β cobalt oxyhydroxide, α cobalt hydroxide or β cobalt hydroxide, a metal cobalt or a cobalt solid solution.

The conductive material comprises a rare earth element in at least one form selected from a metal, an oxide, and a hydroxide. It is preferable that the rare earth element is at least one selected from yttrium, erbium and ytterbium.

The conductive material comprises zinc in at least one form selected from a metal, an oxide, and a hydroxide.

It is preferable that the conductive material comprises a rare earth element, zinc and a cobalt compound. When the conductive material comprises a rare earth element, zinc and a cobalt compound, an alkaline storage battery having particularly excellent high temperature charging characteristics can be produced.

It is preferable that the active material for a positive electrode of Embodiment 1 comprises the nickel hydroxide and the cobalt compound in a weight ratio of 100: A (where 2 ≤ A ≤ 20).

The active material for a positive electrode of Embodiment 1 comprises the conductive material containing a cobalt compound and at least one element selected from rare earth elements and zinc in the pores of the nickel hydroxide particles, so that an alkaline storage battery having excellent high temperature charging characteristics and a high capacity can be produced, as described in Embodiment 3.

### Embodiment 2

In Embodiment 2, an example of a method of the present invention for producing an active material for a positive electrode will be described.

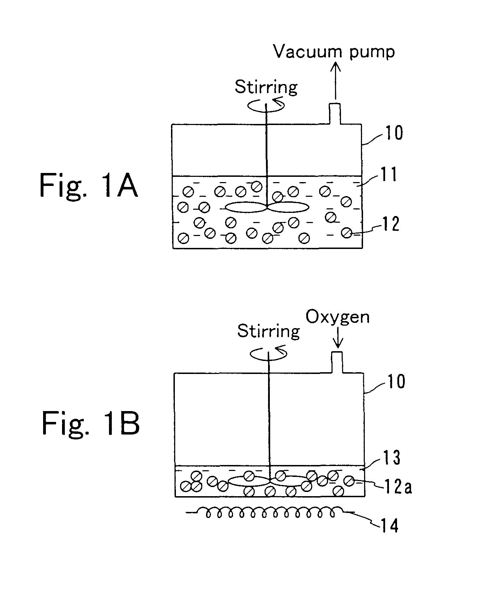

Figs. 1A and 1B show a process sequence of a method of Embodiment 2. In the method of Embodiment 2, first, an aqueous solution 11 containing cobalt and at least one element selected from rare earth elements and zinc is put in an air-tight container 10. Then, as shown in Fig. 1A, particles 12 that contain nickel hydroxide as the main component and are provided with pores (not shown) are added to the aqueous solution 11. Then, the mixture is stirred under a reduced pressure, and thus the conductive material (not shown) containing the rare earth element and the cobalt is filled in the pores of the particles 12 (the first process).

In the first process, it is preferable that the pressure in the air-tight container 10 is 0.05MPa or less during stirring. A reduced pressure in the air-tight container 10 can be achieved easily with a vacuum pump.

The particles 12 comprising nickel hydroxide as the main component are the same as those described in Embodiment 1, and therefore will not be described further.

It is preferable that the rare earth element contained in the conductive material is at least one selected from yttrium, erbium, and ytterbium. Yttrium can be supplied by using a compound such as yttrium sulfate, yttrium hydroxide, and yttrium nitrate. Among these, yttrium sulfate is preferable. Cobalt can be supplied by using a compound such as cobalt sulfate, cobalt nitrate, and cobalt acetate. Among these, cobalt sulfate is preferable.

It is particularly preferable that the aqueous solution 11 comprises cobalt, zinc and a rare earth element. In this case, it is preferable that the concentration of the cobalt compound contained in the aqueous solution 11 is 0.4mol/L or more. It is preferable that the concentration of the zinc compound contained in the aqueous solution 11 is 0.002mol/L or more. It is preferable that the concentration of the rare earth compound contained in the aqueous solution 11 is 0.006mol/L or more.

Thereafter, the thus treated nickel hydroxide particles are separated from the aqueous solution. And as shown in Fig. 1B, a concentrated sodium hydroxide solution 13 is added to the nickel hydroxide particles (particles 12a) that have been subjected to the first process, and the mixture is stirred in an oxygen atmosphere (the second process). In this process, it is preferable that the pH of the concentrated sodium hydroxide solution 13 is 13 to 14. Another concentrated alkaline solution can be used in place of the concentrated sodium hydroxide solution 13.

In the second process, it is preferable to stir the concentrated sodium hydroxide solution 13 while heating it with a heater 14. More specifically, it is preferable to heat the concentrated sodium hydroxide solution 13 to a temperature of 80°C to 110°C.

According to the method for producing an active material for a positive electrode of Embodiment 2, the active material for a positive electrode described in Embodiment 1 can be produced easily.

The method for producing an active material for a positive electrode of Embodiment 2 can be applied to a method for producing an alkaline storage battery.

### Embodiment 3

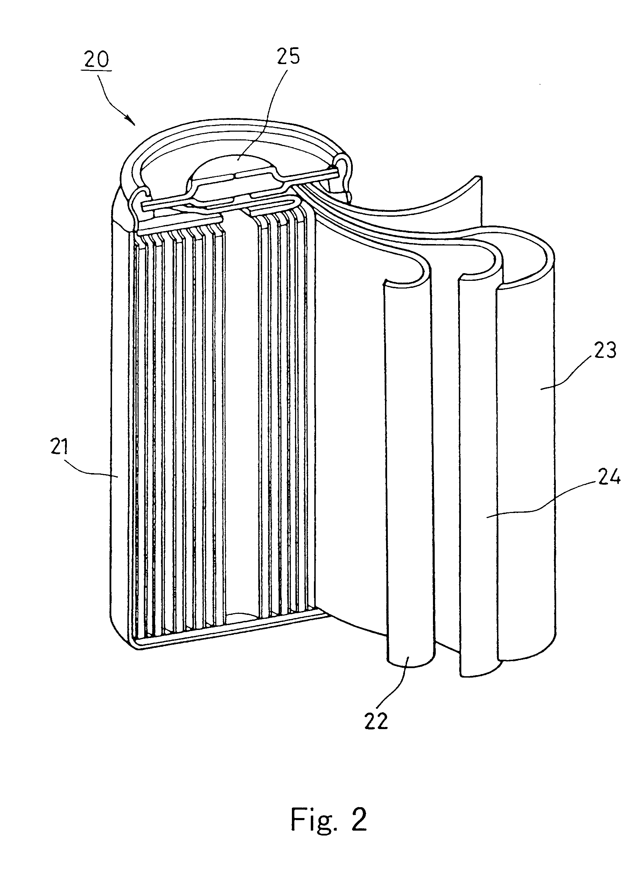

In Embodiment 3, an example of an alkaline storage battery of the present invention will be described. Fig. 2 shows a partially exploded perspective view of an alkaline storage battery 20 of Embodiment 3 (hatching is omitted).

The alkaline storage battery 20 of Embodiment 3 includes a case 21, a positive electrode 22 enclosed in the case 21, a negative electrode 23, an electrolyte (not shown), a separator 24 disposed between the positive electrode 22 and the negative electrode 23, and a sealing plate 25 provided with a safety valve.

The case 21 is made of, for example, a steel can, and may serve as a negative terminal as well.

The positive electrode 22 comprises an active material support and an active material for a positive electrode supported by the active material support. The active material support also serves as a collector. As the active material support, a metal porous material such as a nickel foam or a punching metal can be used, for example. In the alkaline storage battery of Embodiment 3, the active material of the present invention described in Embodiment 1 is used as the active material for a positive electrode.

For the negative electrode 23, the electrolyte, the separator 24 and the sealing plate 25, materials that commonly are used for alkaline storage batteries can be used. For example, a negative electrode containing a hydrogen absorbing alloy or cadmium hydroxide as the active material can be used for the negative electrode 23. For the electrolyte, for example, an alkaline solution containing KOH as the solute can be used. For the separator 24, for example, polypropylene nonwoven fabric treated to be hydrophilic can be used.

The alkaline storage battery 20 can be produced by a regular method, as described in the examples described later.

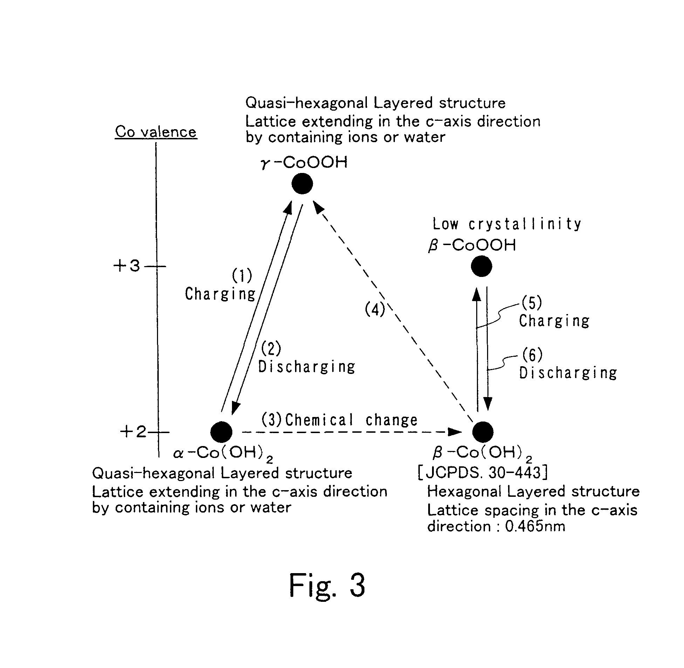

In the alkaline storage battery of Embodiment 3, the active material described in Embodiment 1 is used. The active material for a positive electrode of Embodiment 1 comprises cobalt and at least one element selected from rare earth elements and zinc in the pores of the nickel hydroxide particles. Since the rare earth element or zinc increases oxygen overvoltage, oxygen production from a competitive reaction when charging in a high temperature atmosphere can be suppressed. Therefore, the alkaline storage battery of Embodiment 3 can be provided with excellent charging characteristics in a high temperature atmosphere. Moreover, in the alkaline storage battery of Embodiment 3, deep charging can be performed in a low electric potential. Therefore, β cobalt oxyhydroxide (β-CoOOH) or a cobalt compound embedded in the pores of the nickel hydroxide particles can be converted to γ cobalt oxyhydroxide (γ-CoOOH). While not wishing to be bound by any particular theory on this reaction, a reaction path presumed at present will be described with reference to Fig. 3.

There are, roughly, three types for a bivalent cobalt oxide contained in the positive electrode, that is, α-Co(OH)₂, β-Co(OH)₂ and CoO. α-Co(OH)₂ readily is converted to β-Co(OH)₂ in an alkaline electrolyte by a chemical reaction indicated by (3) in Fig. 3. Also, CoO (not shown in Fig. 3) readily is converted to β-Co(OH)₂ in an alkaline electrolyte by a chemical reaction. Then, the β-Co(OH)₂ is oxidized according to a reaction (5) at the initial charging, and is converted to β-CoOOH having electroconductivity. However, in general, since the crystallite of β-Co(OH)₂ is large, in the charging reaction that proceeds mostly in the solid phase reaction manner, there is only a small number of reactive sites for the oxidation reaction (a reaction in which electrons or protons are removed from cobalt hydroxide). Therefore, unreacted cobalt hydroxide that is not conductive remains inside the crystals. The amount of the unreacted cobalt hydroxide seems to depend on conditions such as the magnitude of charging current at the initial charging and the ambient temperature and the composition of the electrolyte.

The thus formed cobalt oxide containing β-CoOOH can be reduced (discharged) by a reaction (6), but this reduction reaction does not occur in the electric potential range for charging and discharging of a regular battery. Therefore, the cobalt oxide containing β-CoOOH serves as a conductive network for promoting smooth charging and discharging of nickel hydroxide particles.

On the other hand, since the alkaline storage battery of the present invention uses the active material described in Embodiment 1, a deep charging reaction is effected so that β-Co(OH)₂ is oxidized (charged) to γ-CoOOH through a reaction path (4). The γ cobalt oxyhydroxide has a higher conductivity than that of β cobalt oxyhydroxide, and therefore an alkaline storage battery including a positive electrode having a particularly high conductivity can be obtained. In other words, according to the alkaline storage battery of Embodiment 3, an alkaline storage battery having a high utilization factor of the positive electrode and excellent high rate discharging characteristics can be obtained. Furthermore, in the alkaline storage battery of Embodiment 3, the conductive network of the positive electrode is formed substantially uniformly, so that an alkaline storage battery with a high capacity can be obtained.

The alkaline storage battery shown in Fig. 2 is only an example, and the alkaline storage battery of the present invention can be of another structure, as long as it uses the active material for a positive electrode of the present invention.

### Examples

Hereinafter, the present invention will be described by way of examples more specifically.

### Example 1

In Example 1, an example of the active material of Embodiment 1 produced by the method of Embodiment 2 will be described.

First, an aqueous solution containing cobalt sulfate, zinc oxide and yttrium sulfate was put in a sealed reaction vessel (air-tight container 10). Then, the nickel hydroxide powder constituted by nickel hydroxide particles described in Embodiment 1 was fed in the aqueous solution. Then, the mixture was stirred under a reduced pressure (the first process, see Fig. 1A).

Next, the thus treated nickel hydroxide powder was separated from the aqueous solution, and a mixture of the nickel hydroxide powder and a concentrated sodium hydroxide solution was stirred while being heated in an oxygen atmosphere (the second process, see Fig. 1B).

A variety of active materials for positive electrodes were produced under varied reaction conditions in the first and second processes. Table 1 shows the conditions under which samples 1 to 9, which are the active materials of the present invention, and a comparative example were produced. Table 1 shows the conditions with respect to 100g of nickel hydroxide.

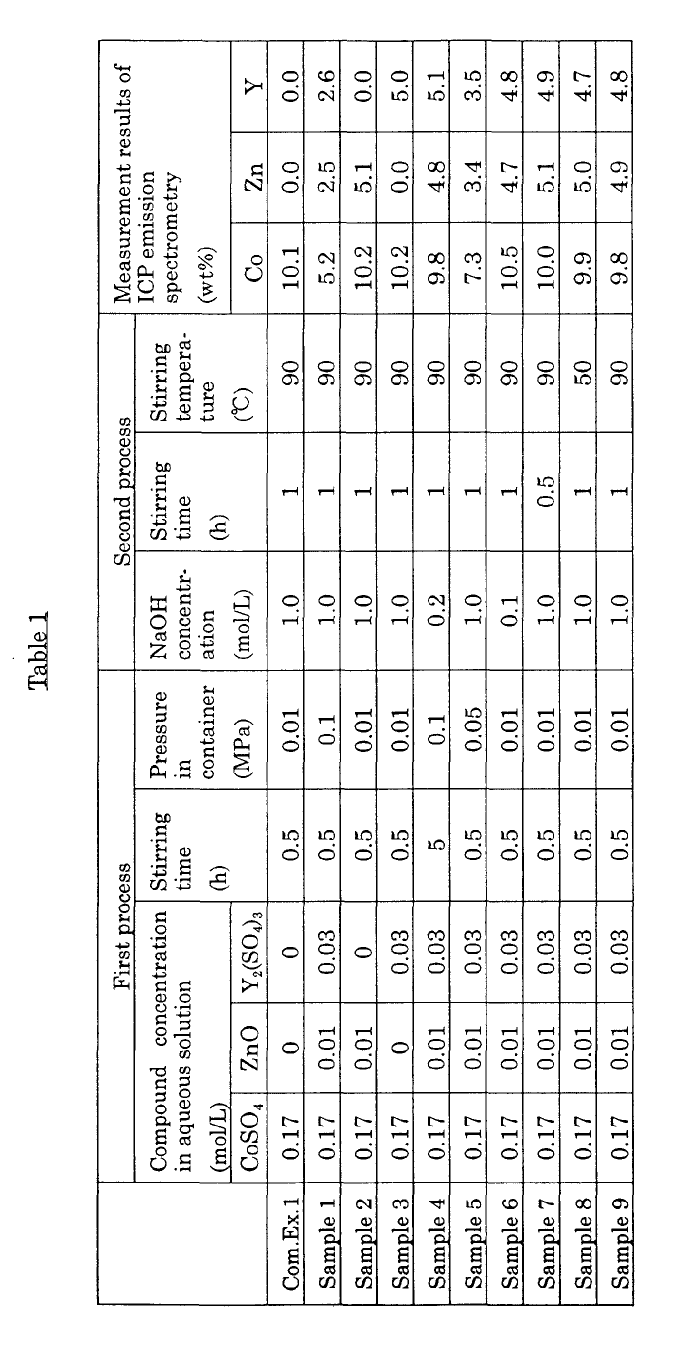

Table 1 also shows the results of measuring the contents (wt%) of Co, Zn and Y with respect to Ni(OH)₂ with ICP emission spectrometry regarding the active materials of the samples 1 to 9 and the active material of the comparative example.

As seen from Table 1, in the samples 1 to 9, Zn or Y and Co are incorporated into the nickel hydroxide particles by the above-described processes.

### Example 2

An example of the alkaline storage battery of the present invention is produced with the active material produced in Example 1.

First, a positive electrode (positive electrode 22) was produced. More specifically, first, water was added to the active material for a positive electrode produced under the conditions shown in Table 1, and the mixture was kneaded to prepare a paste. Then, the paste was filled in a nickel foam (porosity of 95%, surface density of 450g/cm²) as a support, and the pastefilled nickel foam was dried and pressed to produce a positive electrode sheet. Then, the positive electrode sheet was cut to a predetermined size (thickness of 0.5mm, width of 35mm, and length of 110mm). Thus, a positive electrode with a theoretical capacity of 1000mAh was produced.

An A4-sized alkaline storage battery was produced with the positive electrode. More specifically, a negative electrode formed of a hydrogen absorbing alloy expressed by a composition formula MmNi_{3.6}Co_{0.7}Mn_{0.4}Al_{0.3} (Mm: misch metal) was used for the negative electrode (negative electrode 23). A sulfonated polypropylene separator was used for the separator (separator 24). The positive electrode and the negative electrode opposed to each other with the separator interposed therebetween were curled together in coil form, and inserted in a case that also serves as a negative terminal (case 21). Thereafter, 2.0cm³ of an alkaline electrolyte in which lithium hydroxide was dissolved in a concentration of 20g/L in a potassium hydroxide solution with a specific gravity of 1.3 was poured in the case. Thereafter, the case was sealed with a sealing plate provided with a safety valve (a sealing plate 25). In this case, the sealing plate also served as a positive terminal, and the support (collector ) of the active material for a positive electrode and the sealing plate were welded.

Thus, a variety of batteries were produced with the active materials for a positive electrode produced in Example 1, and were examined regarding the discharge capacity. More specifically, the batteries were (1) charged in an atmosphere with 25°C, 35°C, 45°C, and 55°C at a charging rate of 100mA (0.1C) for 15 hours; (2) allowed to stand in an atmosphere of 25 °C for 3 hours; and (3) discharged in an atmosphere of 25°C at a discharging rate of 0.2C until the battery voltage reached 1.0V. These operations constituted one cycle. Table 2 shows the discharge capacity at the second cycle.

**Table 2**

| | Discharge capacity (mAh) | | | |
|---|---|---|---|---|
| | Charging at 25°C | Charging at 35°C | Charging at 45°C | Charging at 55°C |
| Com.ex.1 | 960 | 910 | 700 | 350 |
| Sample 1 | 900 | 850 | 810 | 760 |
| Sample2 | 955 | 910 | 790 | 460 |
| Sample3 | 945 | 915 | 810 | 500 |
| Sample4 | 950 | 900 | 855 | 810 |
| Sample5 | 945 | 900 | 850 | 805 |
| Sample6 | 955 | 905 | 855 | 815 |
| Sample7 | 950 | 895 | 850 | 805 |
| Sample8 | 945 | 895 | 845 | 800 |
| Sample9 | 960 | 910 | 865 | 815 |

The utilization factor of the active material for a positive electrode can be obtained by dividing the discharge capacity of Table 2 by the theoretical capacity of 1000mAh. Table 2 indicates that the alkaline storage batteries produced with a ZnO concentration of 0.01mol/L and a Y₂(SO₄)₃ concentration of 0.03mol/L in the first process can be charged sufficiently in a high temperature atmosphere as well. Thus, the alkaline storage batteries according to the present invention can have a high capacity in a wide range of temperatures.

The current-voltage characteristics of the same batteries were measured in an atmosphere with - 20°C, 0°C, and 25°C when the state of charge (SOC) was 50%, and the internal resistance was calculated based on the gradient of the current-voltage characteristics. The gradient of the current-voltage characteristics was obtained by charging the batteries so that the SOC reached 50%; discharging and charging at 100mA (0.1C), 200mA (0.2C), 500mA (0.5C), 1.0A (1.0C), 2.0A (2.0C), 3.0A (3.0C) and 5.0A (5.0C); measuring the voltages at 10 seconds after the discharging start and the charging start; and averaging the voltages. The batteries were allowed to stand for 10 minutes between discharging and charging, and charging was performed only for 10 seconds. Table 3 shows the calculation results.

**Table 3**

| | Internal resistance (mΩ) | | |
|---|---|---|---|
| | -20°C | 0°C | 25°C |
| Com.Ex. 1 | 110.0 | 50.5 | 18.5 |
| Sample 1 | 125.0 | 60.5 | 20.5 |
| Sample 2 | 115.0 | 51.5 | 18.0 |
| Sample 3 | 112.5 | 52.0 | 18.0 |
| Sample 4 | 100.0 | 40.5 | 15.5 |
| Sample 5 | 95.5 | 40.0 | 16.0 |
| Sample 6 | 98.5 | 41.0 | 15.5 |
| Sample 7 | 100.5 | 40.5 | 15.5 |
| Sample 8 | 95.5 | 40.0 | 16.0 |
| Sample 9 | 90.5 | 40.0 | 15.0 |

Table 3 indicates that the alkaline storage batteries produced with a ZnO concentration of 0.01mol/L and a Y₂(SO₄)₃ concentration of 0.03mol/L in the first process have a low internal resistance.

An active material for a positive electrode of an alkaline storage battery comprising particles containing nickel hydroxide and provided with pores, and a conductive material filled in the pores. The conductive material includes a cobalt compound and at least one element selected from the group consisting of rare earth elements and zinc.

## Claims

1. An active material for a positive electrode of an alkaline storage battery comprising particles comprising nickel hydroxide and provided with pores, and a conductive material filled in the pores,
wherein the conductive material comprises a cobalt compound and at least one element selected from the group consisting of rare earth elements and zinc.

2. The active material for a positive electrode according to claim 1, wherein an average radius of the pore is in a range of 1nm to 8nm.

3. The active material for a positive electrode according to claim 1 or 2, wherein the cobalt compound comprises γ cobalt oxyhydroxide.

4. The active material for a positive electrode according to claim 1, wherein the rare earth element is at least one selected from the group consisting of yttrium, erbium, and ytterbium.

5. The active material for a positive electrode according to any one of claims 1 to 4, comprising the nickel hydroxide and the cobalt compound in a weight ratio of 100: A, where 2 ≤ A ≤ 20.

6. A method for producing an active material for a positive electrode of an alkaline storage battery comprising a first process of:
adding particles comprising nickel hydroxide and provided with pores to an aqueous solution comprising cobalt and at least one element selected from the group consisting of rare earth elements and zinc; and
stirring the aqueous solution under a reduced pressure,
thereby filling a conductive material comprising the cobalt and the at least one element in the pores.

7. The method according to claim 6, further comprising a second process of adding an alkaline solution to the particles that have been subjected to the first process to form a mixture of the alkaline solution and the particles, and stirring the mixture in an oxygen atmosphere.

8. The method according to claim 7, wherein the stirring is performed while heating in the second process.

9. The method according to claim 7 or 8, wherein the alkaline solution is a sodium hydroxide solution.

10. The method according to any one of claims 6 to 9, wherein an average radius of the pore is in a range of 1nm to 8nm.

11. The method according to any one of claims 6 to 9, wherein the rare earth element is at least one selected from the group consisting of yttrium, erbium, and ytterbium.

12. An alkaline storage battery comprising a positive electrode, a negative electrode, and an electrolyte, wherein the positive electrode comprises the active material of claim 1.
